# EUROPEAN PATENT SPECIFICATION

(11) **EP 4 276 156 B1**
(45) Date of publication and mention of the grant of the patent: **08.01.2025**
(21) Application number: 22173033.6
(22) Date of filing: 12.05.2022
(51) Int. Cl.: C09J 5/02, B23K 26/36, C23C 18/20, B29C 65/48, C08J 5/12, A61C 17/22, F16B 11/00, B23K 26/142, B23K 26/0622, F16B 7/04, B23K 26/16

(54) **METHOD OF GLUING METAL PARTS**
VERFAHREN ZUM VERKLEBEN VON METALLTEILEN
PROCÉDÉ DE COLLAGE DE PIÈCES MÉTALLIQUES

(43) Date of publication of application: 15.11.2023
(73) Proprietor: Braun GmbH, 61476 Kronberg im Taunus (DE)
(72) Inventor: GROSS, Dieter Heinz Josef, 61476 Kronberg (DE); KNORR, Marcel, 61476 Kronberg (DE); LIMPERT-KIESEL, Marko, 61476 Kronberg (DE); BAIER, Florian, 61476 Kronberg (DE); RUEPPEL, Thomas, 97828 Marktheidenfeld (DE); SCHAEFER, Norbert, 61476 Kronberg (DE); LATZA, Eric Edgar, 61476 Kronberg (DE)
(74) Representative: P&G Patent Germany

(56) References cited:
- EP-A1- 2 253 413
- EP-A2- 3 881 962
- WO-A1-2021/048704
- JP-A- H10 193 158
- US-A1- 2020 316 721

## Description

### FIELD OF THE INVENTION

The present disclosure is concerned with a method of gluing a first metal part to another part such as a second metal part, where at least a surface portion of the first metal part is treated with laser pulses to activate the outer metal surface prior to applying an adhesive.

### BACKGROUND OF THE INVENTION

It is known to prepare a surface portion of a first metal part intended for being glued to another part with laser pulses to remove contaminants on the surface of the metal surface and to activate the metal surface so that a glue will better adhere to the metal surface. Document EP 3 792 323 A1 generally describes such a gluing method.

There is a general desire to improve a gluing method comprising the treatment of a metal surface with laser pulses, specifically to improve such a gluing method with respect to the resulting purity of the activated metal surface and to improve the endurance of the adhesive connection.

### SUMMARY OF THE INVENTION

In accordance with at least one aspect a method of gluing a first metal part to another part is proposed that includes the steps of (a) providing a first metal part such as a steel part, and another part such as a second metal part, (b) treating a surface portion of the first metal part intended for being glued to the other part with laser pulses so that a surface layer of the first metal part across the surface portion is removed, preferably by ablation, (c) while applying laser pulses to the surface portion of the first metal part also applying a pressurized air or gas stream to the surface portion, (d) applying an adhesive to at least the surface portion of the first metal part and/or to a surface of the other part, and (e) gluing the first metal part and the other part together.

In accordance with at least one aspect a method of manufacturing a personal care device including the step of gluing a steel shaft into a metal cap, the method comprising the steps of (a) providing the steel shaft and the metal cap sized to receive at least a tip region of the steel shaft, (b) treating a surface portion of the steel shaft intended for being glued to the metal cap with laser pulses so that a surface layer from the steel shaft across the surface portion is removed, preferably by ablation, (c) while treating the surface portion of the steel shaft with the laser pulses also applying a pressurized air or gas stream to the surface portion, (d) treating at least a portion of an inner surface of the metal cap intended for being glued to the respective surface portion of the steel shaft with laser pulses, (e) applying an adhesive to the surface portion of the steel shaft and/or to the portion of the inner surface of the metal cap, and (f) fitting the metal cap onto the steel shaft and curing of the adhesive.

### BRIEF DESCRIPTION OF THE DRAWINGS

The present disclosure will be further elucidated by a detailed description of example embodiments and with reference to figures. In the figures
- Fig. 1: is a cross-sectional cut through an example set-up for treating a surface portion of a first metal part with laser pulses under the simultaneous application of a pressurized air or gas stream;
- Fig. 2: is a cross-sectional cut through another example set-up for treating a surface portion of a first metal part with laser pulses under the simultaneous application of a pressurized air or gas stream;
- Fig. 3: is a depiction of a simulation of a pressurized air or gas stream being directed towards a first metal part having a surface portion to be treated with laser pulses;
- Fig. 4: is a depiction of static pressure of a pressurized air or gas stream on the surface portion of a first metal part for a set-up as is depicted in Fig. 3 as derived from two different simulations;
- Fig. 5A: is a SEM picture of a surface portion of a first metal part that was treated with laser pulses without application of a pressurized air or gas stream;
- Fig. 5B: is a SEM picture of a surface portion of a first metal part that was treated with laser pulses with application of a pressurized air or gas stream;
- Fig. 6A: is a photograph of a first metal part, specifically a steel shaft, that has a surface portion that was treated with laser pulses without application of a pressurized air or gas stream and where an adhesive connection with a metal cap was tested with a hammering method as explained in the description;
- Fig. 6B: is a photograph of a first metal part, specifically a steel shaft, that has a surface portion that was treated with laser pulses with simultaneous application of a pressurized air or gas stream and where an adhesive connection with a metal cap was tested with a hammering method as explained in the description;
- Fig. 7: is a perspective view onto an example nozzle section of a pressurized air or gas delivery system;
- Fig. 8A: is a depiction of an example personal care device; and
- Fig. 8B: is a magnification of the personal care device of Fig. 7A that is shown in a partially cut open state where a cross-sectional cut through a metal cap being glued to a steel shaft is visible.

### DETAILED DESCRIPTION OF THE INVENTION

While it has been contemplated to perform laser pulse treatment of metal surfaces under a suction hood or a more locally provided exhaustion system to remove metal vapors, i.e., small metal particles created in the laser pulse-induced ablation process and to avoid that metal vapor containing air pollutes the environment, it was found that even a strong exhaustion system is not able to reliably remove metal vapor or particulate metal material from a treatment volume, where treatment volume means at least the volume around a surface portion of a first metal part that is being treated with laser pulses and that typically gets polluted with metal vapor. The metal particles and/or metal ions of the metal vapor thus can eventually redeposit on the just ablated metal surface, which leads to reduction in the purity of the ablated metal surface and thus to a reduced adherence of glue to the re-contaminated metal surface. It was found that such redeposition, while basically relevant for all metal surfaces, becomes specifically troublesome for steel surfaces, which is believed to be due to the chromium content of steel.

In accordance with the present disclosure, a pressurized air or gas stream is directed to the surface portion of the first metal part that is being treated with laser pulses, e.g., to the surface portion where surface areas are ablated by laser pulses. The pressurized air or gas stream tends to carry away the metal vapor and the particulate metal matter that become ejected into the surroundings, i.e., into the treatment volume, from the treated surface portion by the effects of the ablating laser pulses, which, depending on the pulse length and the applied energy may be considered as causing sublimation and melting of surface layers. Due to the sudden sublimation and melting, atoms and particulate matter in the micrometer and sub-micrometer range is catapulted into the treatment volume around the surface portion being treated. The gaseous and particulate components may create a plasma that shields the surface portion being treated by laser pulses and some of the laser energy may become absorbed by the plasma and thus the ablation process may become diminished. Further, the particulate matter may impact onto the ablated surface again and may then cause recontamination of the activated metal surface. It was found that recontamination in general and for a first metal part made of steel specifically recontamination comprising chromium causes loosely adhering recontamination areas that may cause breaking points for the glue being applied to the ablated surface. It was identified that the application of a pressurized air or gas stream to the treated surface portion can considerably improve the resulting purity of the ablated surface portion and the probability that metal particles become deposited on the ablated metal surface is reduced as the metal particles are carried away by the pressurized air or gas stream. The glued together parts endure much higher stress then glued together part where no pressurized air or gas stream was applied, which is discussed below.

An "air or gas stream" in accordance with present disclosure means a stream of regular air or a stream of an inert gas such as nitrogen and/or argon and mixtures of air and purified inert gases may be considered as well.

While in the present disclosure the term "adhesive" shall mean all adhesives that are suitable for gluing a first metal metal to another part, specifically a second metal part, one example adhesive is DELO DUPOPOX CR8016 available from company DELO Industrie Klebstoffe GmbH & Co. KGaA, Windach, Germany.

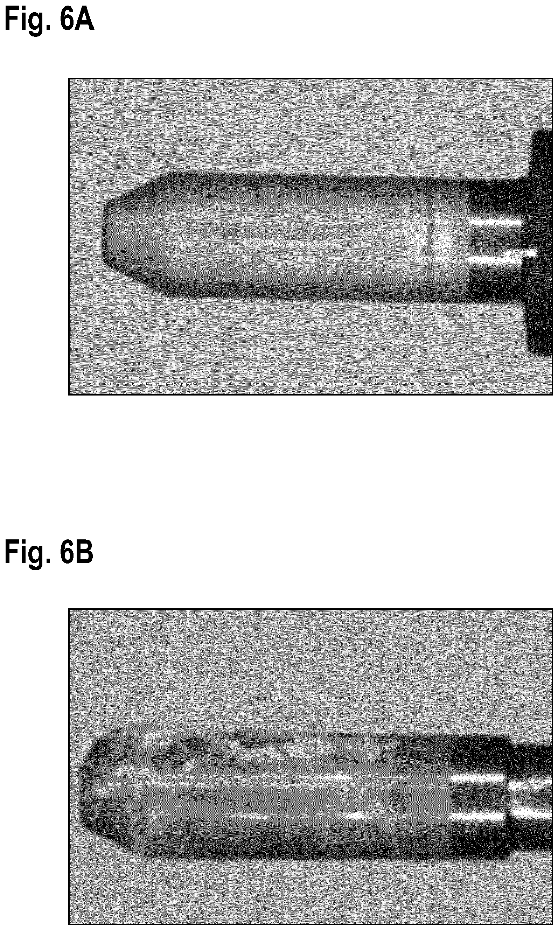

With hindsight it may sound obvious to apply a pressurized air or gas stream to a currently being laser-ablated metal surface, but it indeed was a lengthy process to understand the lack of expected adherence between the finally glued together parts when a pressurized air or gas stream was not applied. This was specifically the case as such lack of expected adherence only showed up for a small fraction of glued metal parts in the practical example that is exemplified further below in Figs. 6A and 6B.

First, it was the usual and common believe that an exhaustion system working with underpressure to remove the air and thus also any vaporized material and/or small particles present in the treatment volume around the treatment area provides sufficient performance to clean the treatment volume from metal vapors. Second, a pressurized air or gas stream being applied to the currently being laser-ablated surface had not been considered by people skilled in the art before. Various parameters of the air or gas stream were investigated with respect to the quality of the ability of the air stream to carry away the metal vapor and/or particulate matter around the surface portion being tretead, i.e., from the treatment volume, and to thus reduce the recontamination of the just activated metal surface. Air or gas stream parameters that were investigated are the following: velocity of the air or gas at the surface portion being treated, velocity of the air or gas at the outlet of a pressure nozzle, distance of the pressure nozzle to the surface portion being treated, amount of air or gas delivered by the pressure nozzle (also known as air flow volume), shape of the pressure nozzle, and orientation and/or position of the pressure nozzle relative to the treated surface portion. These air or gas stream parameters are discussed in more detail in the following.

Metal particles created in the laser pulse-induced ablation process tend to have velocities that can extend into the sonic and supersonic range, where it is understood that the speed of sound is 343 m/s in air at 20 degrees Celsius.

It was found that a velocity of the pressurized air or gas stream at the surface portion being treated with a laser being in the range of the velocity of the particulate matter in the treatment volume may cause a more prominent reduction of recontamination than velocities being higher or much lower. A velocity of the pressurized air or gas stream at the surface portion being treated in a range of between 80 m/s and 400 m/s has been found to be effective.

The pressurized air or gas stream or jet is typically delivered by a pressurized air or gas delivery system, e.g., a compressed air or gas reservoir. The pressurized air or gas stream is typically exiting the pressurized air or gas delivery system via a pressure nozzle. It was also found that a velocity of the pressurized air or gas delivery system at the pressure nozzle may be in a range of between 100 m/s and 700 m/s. The pressurized air or gas may have a compression in the range of between 1 bar to 6 bar (these values mean the compression above atmospheric pressure), where the compression may preferably be in a range of between 2 bar and 5 bar. The pressurized air or gas stream may be directed towards the surface portion of the first metal part that is being treated with laser pulses. It was found that a pressure nozzle having an exit shape, i.e., the shape of the the air or gas outlet, so that the pressurized air or gas stream impinging onto the surface portion being treated has about a cross-sectional shape that follows the shape of the surface portion tends to lead to improved adhesion results. It is believed that this can be assigned to a more constant static pressure of the pressurized air or gas stream over the surface portion being treated. Specifically, the static pressure of the pressurized air or gas stream over at least 50% of the surface portion is not deviating from a mean static pressure value in the at least 50% of the surface portion by more than about ±20%, preferably by more than about ±15%. The surface portion being treated may specifically relate to the length of a laser pulse line. It can be assumed that the surface portion being treated has a certain area that may be covered by abutting or slightly overlapping laser pulses. E.g., a single laser pulse may be circular and may have a diameter of 50 µm and a pulse length in the nanosecond to femtosecond range. The pulses may be applied at a frequency of 400 kHz. The pulses along a laser line of pulses may then have a center-to-center distance of 20 µm. A line of pulses having a length of 10 mm can thus be applied in 1/800 second. That means that an area of 1.6 mm2 can be treated within a second (ignoring any time that is needed to turn the laser beam, which is typically done by mirrors). That means that the surface region being treated has a length extension that is defined by the laser line length. As mentioned, it seems to be beneficial to use a pressurized air or gas stream that covers the full length of the laser line. The pressurized air or gas stream may also cover the width of the total surface portion to be treated, but in order to limit the need for pressurized air or gas one can also limit the width of the pressurized air or gas stream and then either the pressurized air or gas stream may be arranged to follow the laser in width direction or the first metal part may be moved to keep the currently being treated surface portion inside the cross-section of the pressurized air or gas stream. In case that the first metal part has a total surface portion to be treated that extends circumferentially around the first metal part, the first metal part may be rotated so that the currently being treated surface portion stays within the cross-section of the pressurized air or gas stream. The width of the pressurized air or gas stream may then be chosen to be larger than the width of the rotating first metal part so that the pressurized air or gas stream can carry metal vapor and particulate matter around the first metal part where the pressurized air or gas stream together with the carried along metal vapor and particulate matter is eventually exhausted by an exhaustion system.

It was found that it is sensible to place the pressure nozzle having an air or gas outlet at a distance to the surface portion being treated in the range of between 4 mm and 20 mm, preferably in a range of between 8 mm and 16 mm, where the distance is measured between a central point of the air or gas outlet and a central point of the surface portion. It may be sensible to try to place the pressure nozzle as close to the first metal part as possible as the velocity of the pressurized air or gas stream reduces the longer the distance is. The pressure nozzle cannot be placed in the laser path but can be placed at any side with respect to the surface portion being treated, where it may be preferred to place it underneath or above the surface portion being treated, where underneath or above shall mean with respect to the line of laser pulses that is applied onto the surface portion.

In case that the total surface area to be treated with laser pulses is curved, e.g., if the total surface area is a surface of a metal shaft that circumferentially extends around the shaft, either the laser may be moved around the first metal part or the first metal part may be moved, e.g., rotated. That implies that the pressurized air or gas stream does not need to cover the complete total surface area that is intended to be treated with laser pulses but that it is sufficient to have the pressurized air or gas stream impinge onto the surface portion that is currently being treated. That means that in case the currently being treated surface portion is longer in one direction than in a perpendicular direction, then the nozzle may have an essentially oval or generally elongated shape, where the long axis of the oval or elongated shape may coincide with the longer extension of the currently being treated surface portion.

The exhaustion system, e.g., a double horn exhaustion system enveloping the treatment area, may have a suction power in a range of between 500 l/min to 3000 l/min, i.e., a suction power that may be higher and even considerably higher than the air flow provided by the pressurized air or gas stream.

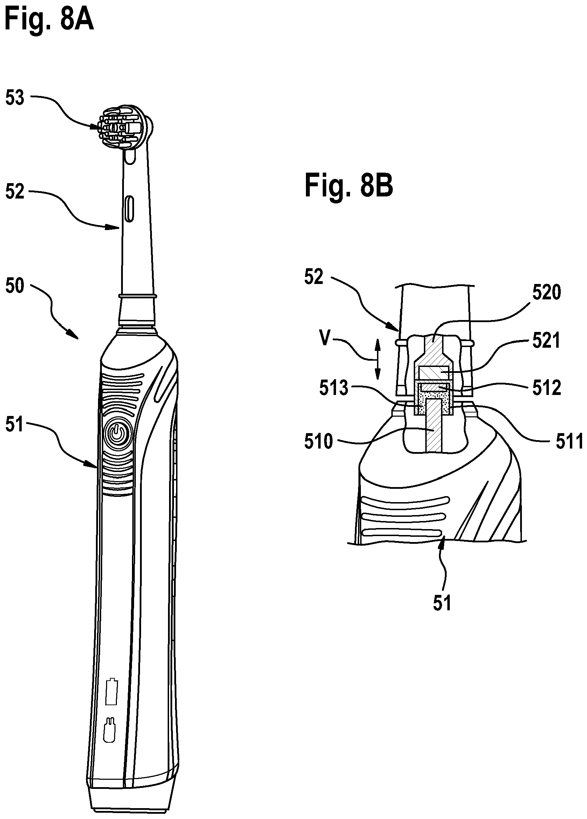

In a practical example, the first metal part is a steel shaft of a personal care device, and the other part is a second metal part, namely a metal cap. The steel shaft may be treated by laser pulses on a total surface area that may circumferentially extend around the steel shaft. In addition to the laser pretreatment, the first metal part in general may be pre-treated first by another method such as plasma pretreatment to immobilize volatile organic compounds on the surface of the metal part. Specifically, a turned and polished metal shaft may still comprise volatile organic compounds on its surface and their immobilization prior to the activation of the metal surface by laser ablation supports keeping the activated surface portion free from contamination. This is of course true for all first metal parts independent from a realization as a steel shaft. The steel shaft may be made from a standard stainless steel and may thus comprise a certain percentage of chromium, e.g., more than 10.5% by weight. The metal cap may as well be made from a standard stainless steel, specifically in a deep drawing process as is generally known in the art. While an inner surface portion of the metal cap may also be pretreated prior to gluing, e.g., by a plasma pretreatment and/or by a laser pretreatment, this should not be considered mandatory. As is exemplified in the description with respect to Fig. 8B, the metal cap is glued onto the tip of the steel shaft and the metal cap may house a further component, e.g., a permanent magnet.

Generally, it is referred to document EP 3 792 323 A1 with respect to details of a metal gluing process comprising femtosecond laser pulse pre-treatment and an optional plasma pretreatment.

Table 1 below lists the relevant values for an ultra-fast laser pulse pre-treatment as one example and some ranges are provided that are considered as sensible, even though the below table shall not exclude values outside of the proposed ranges to be used as well. Overall, the values may be varied to some extent if the light fluence stays within the proposed range. It is reiterated that the herein proposed application of a pressurized air or gas stream is also sensible for longer or even shorter laser pulse lengths.

**Table 1: Example values for an ultra-fast laser pulse pre-treatment of the metal surface and proposed ranges. The various values may be tuned so that the light fluence stays within the proposed range.**

| | Example Value | Proposed Range |
|---|---|---|
| Laser wavelength | 1030 nm | 930 nm - 1064 nm |
| Laser pulse length | 900 fs | 1 fs - 990 fs |
| Laser frequency | 400 kHz | 100 kHz - 1 MHz |
| Laser spot diameter | 50 µm | 30 µm - 80 µm |
| Laser pulse energy | 50 µJ | 30 µJ - 80 µJ |
| Light fluence | ≈ 6.6 J/cm² | 5.0 J/cm² - 8.0 J/cm² |
| Laser feed speed | 8,000 mm/s | 1,000 mm/s - 20,000 mm/s |

A qualitative test method was developed to investigate the strength of the adhesive connection between the first metal part and the other part and was specifically used to test the strength of the adhesive connection between the steel shaft and the metal cap. In this test method a hammer was pivotably mounted at an end of its shaft and the hammer was deflected until a predetermined stopper had been reached and then the hammer was released, became accelerated by gravitation, and hit the metal cap/steel shaft element. Between each stroke the metal cap/steel shaft element was rotated around its longitudinal axis by about 20 to 30 degrees. Metal cap/steel shaft elements manufactured with the described method but without the additionally applied pressurized air or gas stream withheld up to about 110 hammer strokes from a sample size of 30 and those metal cap/steel shaft elements made with the applied pressurized air or gas stream withheld at least about 200 hammer strokes from a sample size of 30. In these hammering tests it was also found that for the metal cap/steel shaft elements made without the pressurized air or gas stream the breakage typically appeared at the border between the adhesive and the steel, i.e., once the metal cap could be separated from the steel shaft with a manual force, essentially no adhesive residues adhered to the steel shaft. In contrast, for the metal cap/steel shaft elements made with the pressurized air or gas stream, the breakage typically occurred within the adhesive, i.e., adhesive residues remained on the steel shaft once the metal cap could be separated from the steel shaft using a manual force. This showed that the surface adhesion between the adhesive and the steel surface was considerably improved when applying a pressurized air or gas stream in the manufacturing method.

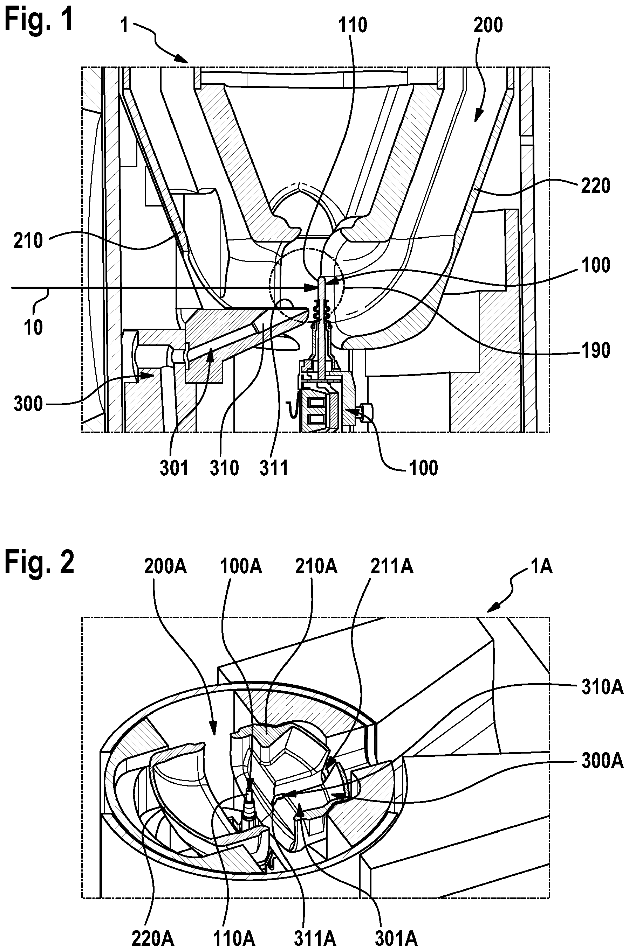

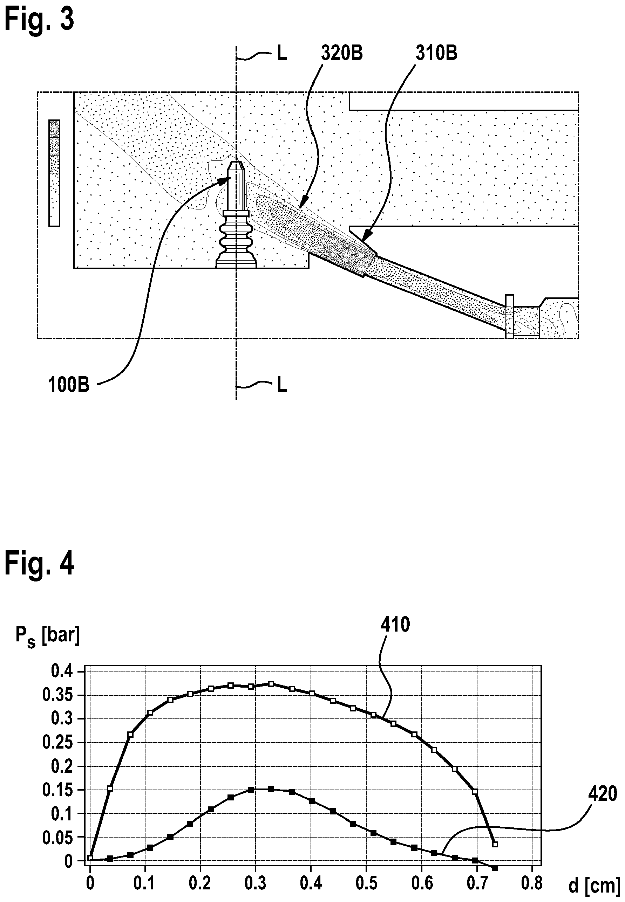

Fig. 1 is a depiction of a first exemplary set-up 1 for pre-treatment of a surface portion 110 of a first metal part 100 with laser pulses, preferably laser pulses having a pulse length in the nano-second, pico-second or femto-second range. The arrow indicates the path 10 of the laser beam being applied onto the surface portion 110 in operation. An exhaustion system 200 comprising a double horn structure having a first suction horn 210 and a second suction horn 220 is arranged to exhaust air and/or gas and/or any vapors or particulate matter from a treatment volume 190 around the first metal part 100. The first metal part 100 is here shaft-like and may be a steel shaft. While this is not relevant for the explanation of Fig. 1, the first metal part 100 is here extending from a complete inner motor chassis intended for insertion onto a housing of a personal care device after another part, namely a metal cap has been glued to the steel shaft. A pressure nozzle section 301 of a pressurized air or gas delivery system 300 is provided outside of the path 10 of the laser pulses and directs a pressurized air or gas stream (see Fig. 3) via pressure nozzle 310 having an air or gas outlet 311 onto the surface portion 110 of the first metal part 100 that is being treated with laser pulses in operation. An air or gas outlet 311 is provided so that the pressurized air or gas stream is directed onto the surface portion 110 being treated. More precisely speaking, as in the shown example the total surface area to be treated with laser pulses extends circumferentially around the first metal part 100, the pressurized air or gas stream is directed to the surface portion 110 that is currently being treated with laser pulses, that is the surface portion 110 where metal vapor and particulate matter is being ejected into the treatment volume 190. The first metal part 100 may be arranged for being movable, e.g., for being rotatable around its longitudinal axis during the treatment so that the laser can then treat all areas of the total surface portion to be treated. The laser beam may also be arranged for having a moving laser beam, where the laser point on the first metal part 100 may be moved in an up and down manner, whereby the laser point may describe a sand-clock type path on the surface portion so that the rotation of the first metal part 100 is compensated and the laser moves along the first metal part 100 in parallel lines. Instead or in addition of being rotated, the first metal part 100 may also be linearly moved.

Fig. 2 is cross-sectional cut through another example set-up 1A for pre-treatment of a surface portion 110A of a first metal part 100A with laser pulses. An exhaustion system 200A comprising a double horn structure having a first suction horn 210A and a second suction horn 220A is arranged to exhaust air and/or gas and/or any vapors or particulate matter from a treatment volume 190A around the first metal part 100A. A pressurized air or gas delivery system 300A is integrated into the exhaustion system 200A, specifically is integrated into the first suction horn 210A. A pressure nozzle 310A having an air or gas outlet 311A is arranged to provide a pressurized air or gas stream that is directed onto the surface portion 110A of the first metal part 100A. A cut-out 211A is provided in the first suction horn 210A to provide for a free path area for a laser beam to irradiate the surface portion 110A. The pressurized air or gas delivery system 300A (only a nozzle portion is shown here) may and least partly be integral with the first suction horn 210A or may be a separate part that, e.g., may fit into first suction horn 210A.

Fig. 3 is a depiction of a simulation of the application of a pressurized air or gas stream 320B emitted from a pressure nozzle 310B, where the density of dots indicates the velocity of the air or gas particles. Fig. 3 represents a two-dimensional cut through the simulated velocity profile of the pressurized air or gas stream 320B, which pressurized air or gas stream 320B is here centrally impinging onto a rotation symmetric first metal part 100B, where the first metal part 100B may here be a steel shaft that is rotation symmetric with respect to a longitudinal axis L. Fig. 3 is shown here as an example of a simulation that showed promising results for the quality of the pressurized air and gar stream.

Fig. 4 is a depiction of two graphs 401 and 402 indicating the static pressure P_{S} on the surface of a first metal part as shown in Fig. 3, where with reference to Fig. 3 the static pressure was simulated along a line from the bottom of the surface portion of the first metal part to the tip. The graphs 401 and 402 indicate the static pressure along the described line of the cross-sectional cut shown in Fig. 3. With respect to graph 401 it can be seen in Fig. 4 that the static pressure P_{S} can be made relatively homogeneous in a larger portion of the surface portion being treated if an exit opening of a pressure nozzle is elongated or oval so that a cross-sectional shape of the pressurized air or gas stream roughly coincides with the shape and specifically the length extension of the surface portion currently being treated with laser pulses. This on the one hand serves to direct the pressurized air or gas stream only against the treated surface portion instead of directing the pressurized air or gas stream into an area on the sides, where the energy would be lost without causing an effect. This on the other hand serves to avoid recontamination due to air or gas flow from areas experiencing a high static pressure into areas experiencing a low static pressure. Graph 420 relates to a circular pressure nozzle that was sized so that the pressurized air or gas stream did not extend beyond the first metal part in a direction perpendicular to the line along which the static pressure was simulated. Hammering tests as described above showed that the adhesive connection endured more hammer strokes when the pressurized air or gas stream caused a static pressure P_{S} as indicated by graph 410.

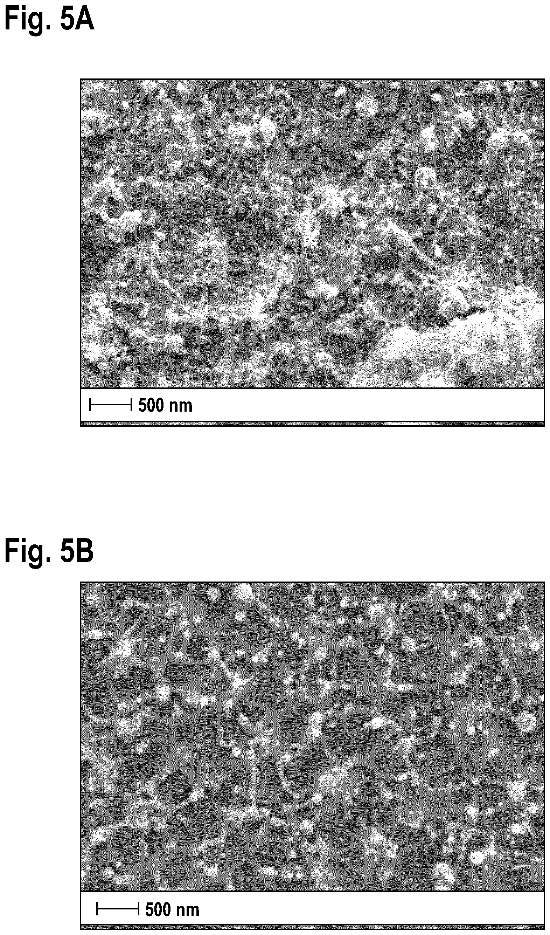

Fig. 5A is a SEM picture, where SEM stands for scanning electron microscope, of a metal part surface, specifically of a steel shaft surface, that had been treated with a femtosecond laser to ablate a top layer, where a pressurized air or gas stream was not applied. A scale indicating 500 nm is shown. Various structures can be seen that are believed to relate to recontamination by particulate matter created in the ablation process. As had been described, it is believed that such recontamination, specifically by metal particles not strongly adhering to the activated metal part surface such as chromium, leads to breaking points for the adhesive connection with an adhesive.

Fig. 5B is a SEM picture relating to the identical scale of 500 nm of a similar metal part surface, again from a steel shaft, that had been treated with a femtosecond laser to ablate a top layer, where a pressurized air or gas stream was applied during the application of laser pulses. The metal surface shows less structures relating to recontamination of the metal surface by particulate matter and vaporized surface material as is visible in Fig. 5A. As was explained before, the application of a pressurized air or gas stream caused a surprising effect by what seems to be a reduction of recontamination of the ablated metal surface. The effect on the adherence of the glue led to the improvements as described above, namely to a much better adhesive to metal surface connection.

It is believed that the effect of the pressurized air or gas stream will also be present for other laser pulse lengths above femtosecond laser pulses, e.g., for picosecond or nanosecond laser pulses and also for attosecond laser pulses.

Fig. 6A is a photographic picture of a steel metal shaft that had been treated with femtosecond laser pulses without application of a pressurized air or gas stream and that had been glued to a metal cap and where the adhesive connection was tested with the hammering method as described above. It can be seen that essentially no macroscopic adhesive residues are left on the metal surface. In contrast, Fig. 6B shows a photographic picture of a steel shaft basically identical to the one shown in Fig. 6A, which steel shaft had also been treated with a femtosecond laser while simultaneously a pressurized air or gas stream as proposed herein was applied. The steel shaft was glued into a metal cap and the adhesive connection was then tested with the hammering method. A lot of adhesive residues remained on the steel shaft. The latter is believed to be a proof that the presence of breaking points on the steel shaft surface due to recontamination was effectively reduced and the hammering method destroyed the adhesive but did not cause a loosening of the adhesive connection between the adhesive and the metal surface.

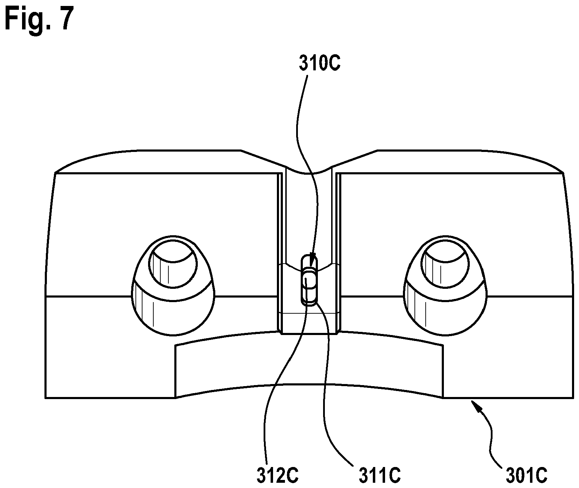

Fig. 7 shows a perspective view onto an example nozzle section 301C of a pressurized air or gas delivery system. The view direction is about from a center point on the surface portion being treated on the first metal part in a pretreatment set-up as exemplary shown in Figs. 1 and 2. The nozzle section 301C comprises a pressure nozzle 310C that has an elongated air or gas outlet 311C. It can also be seen that the pressure nozzle 310C is connected with an essentially circular delivery bore 312C and that the pressure nozzle 311C provides a transition from this circular cross-section into the elongated cross-section of the front of the pressure nozzle 310C, where the cross-section is widened in a length direction and somewhat narrowed in a width direction. The cross-sectional shape of the front of the pressure nozzle 310C may here be described as lozenge shaped (i.e., a rectangle with two semi-circles at the small ends of the rectangle). The air or gas outlet 311C is shaped so that the pressurized air or gas stream covers the full length of the surface portion to be treated by laser pulses.

Fig. 8A is a depiction of an example personal care device 50 realized as an electric toothbrush having a handle portion 51 and a treatment head 52, here realized as a replaceable brush head. The treatment head 52 comprises in the shown example a functional head 53 that can be driven into an oscillating-rotating motion relative to a housing of the treatment head 52.

Fig. 8B is a magnification of a part of the personal care device 50 shown in Fig. 8A, where the magnified part is shown in a partly cut open state so that a coupling between a drive shaft 510 of the handle portion 51 with a motion transmitter 520 of the treatment head 52 can be seen. The drive shaft 510 is in operation driven into a linear reciprocating motion V, which linear reciprocating motion V is transferred via the motion transmitter 520 to the functional head 53 of the treatment head 52, where the linear reciprocating motion is transferred into an oscillating rotation of the functional head 53. The drive shaft 510 may be a steel shaft that had been glued to a metal cap 511. In accordance with the present disclosure, at least a portion of the outer surface of the steel shaft was treated with laser pulses under the simultaneous application of a pressurized air or gas stream. At least a portion of the inner surface of the metal cap may also have been treated with laser pulses, even though this is not mandatory. Specific for the shown example, a permanent magnet 512 is disposed in the metal cap 511 and an adhesive 513 fills the inner hollow of the metal cap 511. The permanent magnet 512 couples with, e.g., a magnetizable steel element 521 that is disposed at the opposing end of the motion transmitter 520. The adhesive connection created by the described gluing method durably connects the steel shaft 510 and the metal cap 511 even under the periodic load acting on the metal cap due to the linear reciprocating motion V and also under an aggressive environment formed by toothpaste and saliva. It is understood that the example shown in Figs. 8A and 7B is not limiting the scope of the present disclosure.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A method of gluing a first metal part to another part, comprising the steps of:
- providing a first metal part such as a steel shaft, and another part such as a second metal part;
- treating a surface portion of the first metal part intended for being glued to the other part with laser pulses so that a surface layer of the first metal part across the surface portion is removed, preferably by ablation;
- while applying laser pulses to the surface portion of the first metal part also applying a pressurized air or gas stream to the surface portion;
- applying an adhesive to at least the surface portion of the first metal part and/or to a surface of the other part; and
- gluing the first metal part and the other part together.

2. The method in accordance with claim 1, wherein the pressurized air or gas stream has a velocity at the surface portion in a range of between 80 m/s and 400 m/s.

3. The method in accordance with claim 1 or 2, wherein the air or gas flow volume of the pressurized air or gas stream is in a range of between 50 l/min and 400 l/min.

4. The method in accordance with one of claims 1 to 3, wherein an angle between a center line of the pressurized air or gas stream and a center line of the laser pulse is in a range of between 10 degrees and 35 degrees.

5. The method in accordance with one of claims 1 to 4, wherein a static pressure of the pressurized air or gas stream over at least 50% of the surface portion is not deviating from a mean static pressure value in the at least 50% of the surface portion by more than about ±20%.

6. The method in accordance with one of claims 1 to 5, wherein the pressurized air or gas stream is provided by a pressure nozzle having an air or gas outlet that has a distance to the surface portion in the range of between 4 mm and 20 mm, preferably in a range of between 8 mm and 16 mm, where the distance is measured between a central point of the air or gas outlet and a central point of the surface portion.

7. The method in accordance with claim 6, wherein the pressure nozzle has a shape so that a cross-sectional shape of the pressurized air or gas stream impinging on the surface portion of the first metal part follows about a shape of the surface portion.

8. The method in accordance with claim 6 or claim 7, wherein a velocity of the pressurized air or gas stream at the air or gas outlet of the pressure nozzle is in a range of between 100 m/s to 700 m/s.

9. The method in accordance with one of claims 6 to 8, wherein the pressurized air or gas stream is delivered from a compressed air or gas reservoir or an air or gas compressor where the air or gas is compressed in the range of between 1 bar to 6 bar, preferably in the range of 2 bar to 5 bar.

10. The method in accordance with one of claims 1 to 9, comprising the step of exhausting air and/or gas from a treatment volume with an exhaustion rate of between 500 l/min and 3000 l/min.

11. The method in accordance with one of claims 1 to 10, comprising the step of rotating the first metal part around a longitudinal extension axis and wherein a total surface portion intended for being glued to the other part circumferentially extends around the first metal part.

12. The method in accordance with one of claims 1 to 11, wherein the laser pulses have a pulse length in the nano-second to femto-second range.

13. A method of manufacturing a personal care device comprising the step of gluing a steel shaft into a metal cap, the method comprising the steps of:
- providing the steel shaft and the metal cap sized to receive at least a tip region of the steel shaft;
- treating a surface portion of the steel shaft intended for being glued to the metal cap with laser pulses so that a surface layer from the steel shaft across the surface portion is removed, preferably by ablation;
- while treating the surface portion of the steel shaft with the laser pulses also applying a pressurized air or gas stream to the surface portion;
- treating at least a portion of an inner surface of the metal cap intended for being glued to the respective surface portion of the steel shaft with laser pulses;
- applying an adhesive to the surface portion of the steel shaft and/or to the portion of the inner surface of the metal cap; and
- fitting the metal cap onto the steel shaft and curing of the adhesive.

14. The method in accordance with claim 13, wherein the pressurized air or gas stream has a velocity at the surface portion in a range of between 80 m/s and 400 m/s.

15. The method in accordance with claim 13 or claim 14, wherein a pressure nozzle delivering the pressurized air or gas stream has a shape so that a cross-sectional shape of the pressurized air or gas stream impinging on the surface portion of the first metal part follows about a shape of the surface portion.

## Patentansprüche

1. Verfahren zum Kleben eines ersten Metallteils an ein anderes Teil, umfassend die Schritte:
- Bereitstellen eines ersten Metallteils, wie einen Stahlschaft, und eines weiteren Teils, wie ein zweites Metallteil;
- Behandeln eines Oberflächenabschnitts des ersten Metallteils, das bestimmt ist, um an das andere Teil geklebt zu werden, mit Laserimpulsen, sodass eine Oberflächenschicht des ersten Metallteils quer über den Oberflächenabschnitt entfernt wird, vorzugsweise durch Ablation;
- während eines Anwendens von Laserimpulsen auf den Oberflächenabschnitt des ersten Metallteils, ebenso Anwenden einer unter Druck gesetzten Luft- oder Gasströmung auf den Oberflächenabschnitt;
- Anwenden eines Klebstoffs auf wenigstens den Oberflächenabschnitt des ersten Metallteils und/oder auf eine Oberfläche des anderen Teils; und
- Zusammenkleben des ersten Metallteils und des anderen Teils.

2. Verfahren nach Anspruch 1, wobei die unter Druck gesetzte Luft- oder Gasströmung an dem Oberflächenabschnitt eine Geschwindigkeit in einem Bereich zwischen 80 m/s und 400 m/s aufweist.

3. Verfahren nach Anspruch 1 oder 2, wobei das Luft- oder Gasströmungsvolumen der unter Druck gesetzten Luft- oder Gasströmung in einem Bereich zwischen 50 l/min und 400 l/min liegt.

4. Verfahren nach einem der Ansprüche 1 bis 3, wobei ein Winkel zwischen einer Mittellinie der unter Druck gesetzten Luft- oder Gasströmung und einer Mittellinie des Laserimpulses in einem Bereich zwischen 10 Grad und 35 Grad liegt.

5. Verfahren nach einem der Ansprüche 1 bis 4, wobei ein statischer Druck der unter Druck gesetzten Luft- oder Gasströmung über wenigstens 50 % des Oberflächenabschnitts von einem durchschnittlichen Wert des statischen Drucks in den wenigstens 50 % des Oberflächenabschnitts um nicht mehr als etwa ±20 % abweicht.

6. Verfahren nach einem der Ansprüche 1 bis 5, wobei die unter Druck gesetzte Luft- oder Gasströmung durch eine Druckdüse bereitgestellt wird, die einen Luft- oder Gasauslass aufweist, der einen Abstand zu dem Oberflächenabschnitt in dem Bereich zwischen 4 mm und 20 mm, vorzugsweise in einem Bereich zwischen 8 mm und 16 mm, aufweist, wo der Abstand zwischen einem mittigen Punkt des Luft- oder Gasauslasses und einem mittigen Punkt des Oberflächenabschnitts gemessen wird.

7. Verfahren nach Anspruch 6, wobei die Druckdüse eine Form aufweist, sodass eine Querschnittsform der unter Druck gesetzten Luft- oder Gasströmung, die auf den Oberflächenabschnitt des ersten Metallteils auftrifft, in etwa einer Form des Oberflächenabschnitts folgt.

8. Verfahren nach Anspruch 6 oder 7, wobei eine Geschwindigkeit der unter Druck gesetzten Luft- oder Gasströmung an dem Luft- oder Gasauslass der Druckdüse in einem Bereich zwischen 100 m/s und 700 m/s liegt.

9. Verfahren nach einem der Ansprüche 6 bis 8, wobei die unter Druck gesetzte Luft- oder Gasströmung von einem Druckluft- oder -gasbehälter oder einem Luft- oder Gaskompressor abgegeben wird, wo die Luft oder das Gas in dem Bereich zwischen 1 bar und 6 bar, vorzugsweise in dem Bereich von 2 bar bis 5 bar, komprimiert ist.

10. Verfahren nach einem der Ansprüche 1 bis 9, umfassend den Schritt eines Absaugens von Luft und/oder Gas aus einem Behandlungsvolumen mit einer Absaugrate zwischen 500 l/min und 3000 l/min.

11. Verfahren nach einem der Ansprüche 1 bis 10, umfassend den Schritt eines Drehens des ersten Metallteils um eine Längserstreckungsachse, wobei sich ein Gesamtoberflächenabschnitt, der bestimmt ist, um an das andere Teil geklebt zu werden, um das erste Metallteil herum in Umfangsrichtung erstreckt.

12. Verfahren nach einem der Ansprüche 1 bis 11, wobei die Laserimpulse eine Impulslänge in dem Nanosekunden- bis Femtosekundenbereich aufweisen.

13. Verfahren zum Herstellen einer Körperpflegevorrichtung, umfassend den Schritt des Klebens eines Stahlschafts in eine Metallkappe, das Verfahren umfassend die Schritte:
- Bereitstellen des Stahlschafts und der Metallkappe, die bemessen ist, um wenigstens eine Spitzenregion des Stahlschafts aufzunehmen;
- Behandeln eines Oberflächenabschnitts des Stahlschafts, der bestimmt ist, um an die Metallkappe geklebt zu werden, mit Laserimpulsen, sodass eine Oberflächenschicht von dem Stahlschaft quer über den Oberflächenabschnitt entfernt wird, vorzugsweise durch Ablation;
- während des Behandelns des Oberflächenabschnitts des Stahlschafts mit den Laserimpulsen, ebenso Anwenden einer unter Druck gesetzten Luft- oder Gasströmung auf den Oberflächenabschnitt;
- Behandeln wenigstens eines Abschnitts einer Innenoberfläche der Metallkappe, die bestimmt ist, um an den jeweiligen Oberflächenabschnitt des Stahlschafts geklebt zu werden, mit Laserimpulsen;
- Anwenden eines Klebstoffs auf den Oberflächenabschnitt des Stahlschafts und/oder auf den Abschnitt der Innenoberfläche der Metallkappe; und
- Aufsetzen der Metallkappe auf den Stahlschaft und Aushärten des Klebstoffs.

14. Verfahren nach Anspruch 13, wobei die unter Druck gesetzte Luft- oder Gasströmung an dem Oberflächenabschnitt eine Geschwindigkeit in einem Bereich zwischen 80 m/s und 400 m/s aufweist.

15. Verfahren nach Anspruch 13 oder 14, wobei eine Druckdüse, die die unter Druck gesetzte Luft- oder Gasströmung abgibt, eine Form aufweist, sodass eine Querschnittsform der unter Druck gesetzten Luft- oder Gasströmung, die auf den Oberflächenabschnitt des ersten Metallteils auftrifft, in etwa einer Form des Oberflächenabschnitts folgt.

## Revendications

1. Procédé de collage d'une première pièce métallique sur une autre pièce, comprenant les étapes suivantes consistant à :
- fournir une première pièce métallique, telle qu'une tige en acier, et une autre pièce, telle qu'une seconde pièce métallique ;
- traiter une partie superficielle de la première pièce métallique destinée à être collée à l'autre pièce à l'aide d'impulsions laser de manière à éliminer, de préférence par ablation, une couche superficielle de la première pièce métallique à travers la partie superficielle ;
- tout en appliquant des impulsions laser à la partie superficielle de la première pièce métallique, appliquer également un flux d'air ou de gaz sous pression à la partie superficielle ;
- appliquer un adhésif sur au moins la partie superficielle de la première pièce métallique et/ou sur une surface de l'autre pièce ; et
- coller la première pièce métallique et l'autre pièce ensemble.

2. Procédé selon la revendication 1, dans lequel le flux d'air ou de gaz sous pression a une vitesse au niveau de la partie superficielle comprise entre 80 m/s et 400 m/s.

3. Procédé selon la revendication 1 ou 2, dans lequel le volume d'air ou de gaz du flux d'air ou de gaz sous pression est compris entre 50 l/min et 400 l/min.

4. Procédé selon l'une quelconque des revendications 1 à 3, dans lequel un angle entre une ligne centrale du flux d'air ou de gaz sous pression et une ligne centrale de l'impulsion laser est compris entre 10 et 35 degrés.

5. Procédé selon l'une quelconque des revendications 1 à 4, dans lequel une pression statique du flux d'air ou de gaz sous pression sur au moins 50 % de la surface ne s'écarte pas d'une valeur moyenne de pression statique dans au moins 50 % de la surface de plus d'environ ±20 %.

6. Procédé selon l'une quelconque des revendications 1 à 5, dans lequel le flux d'air ou de gaz sous pression est fourni par une buse de pression ayant une sortie d'air ou de gaz dont la distance par rapport à la partie superficielle est comprise entre 4 mm et 20 mm, de préférence entre 8 mm et 16 mm, la distance étant mesurée entre un point central de la sortie d'air ou de gaz et un point central de la partie superficielle.

7. Procédé selon la revendication 6, dans lequel la buse de pression a une forme telle qu'une forme de section transversale du flux d'air ou de gaz sous pression qui frappe la partie superficielle de la première pièce métallique suit à peu près une forme de la partie superficielle.

8. Procédé selon la revendication 6 ou la revendication 7, dans lequel la vitesse du flux d'air ou de gaz sous pression à la sortie d'air ou de gaz de la buse de pression est comprise entre 100 m/s et 700 m/s.

9. Procédé selon l'une quelconque des revendications 6 à 8, dans lequel le flux d'air ou de gaz sous pression provient d'un réservoir d'air ou de gaz comprimé ou d'un compresseur d'air ou de gaz où l'air ou le gaz est comprimé entre 1 bar et 6 bars, de préférence entre 2 bars et 5 bars.

10. Procédé selon l'une des revendications 1 à 9, comprenant l'étape d'évacuation de l'air et/ou du gaz d'un volume de traitement avec un taux d'évacuation compris entre 500 l/min et 3 000 l/min.

11. Procédé selon l'une quelconque des revendications 1 à 10, comprenant l'étape de rotation de la première pièce métallique autour d'un axe d'extension longitudinal et dans lequel une portion de surface totale destinée à être collée à l'autre pièce s'étend circonférentiellement autour de la première pièce métallique.

12. Procédé selon l'une quelconque des revendications 1 à 11, dans lequel les impulsions laser ont une longueur d'impulsion comprise entre la nano-seconde et la femto-seconde.

13. Procédé de fabrication d'un dispositif de soins personnels comprenant l'étape de collage d'une tige en acier dans un capuchon métallique, le procédé comprenant les étapes suivantes consistant à :
- fournir la tige en acier et le capuchon métallique dimensionnés pour recevoir au moins une zone de pointe de la tige en acier ;
- traiter une partie superficielle de la tige en acier destinée à être collée au capuchon métallique avec des impulsions laser de manière à éliminer une couche superficielle de la tige en acier à travers la partie superficielle, de préférence par ablation ;
- tout en traitant la partie superficielle de la tige en acier avec les impulsions laser, appliquer également un flux d'air ou de gaz sous pression à la partie superficielle ;
- traiter au moyen d'impulsions laser au moins une partie superficielle intérieure du capuchon métallique destiné à être collé à la partie superficielle correspondante de la tige en acier ;
- appliquer un adhésif sur la partie superficielle de la tige en acier et/ou sur la partie superficielle intérieure du capuchon métallique ; et
- mettre en place le capuchon métallique sur la tige en acier et durcir l'adhésif.

14. Procédé selon la revendication 13, dans lequel le flux d'air ou de gaz sous pression a une vitesse à la surface comprise entre 80 m/s et 400 m/s.

15. Procédé selon la revendication 13 ou la revendication 14, dans lequel une buse de pression délivrant le flux d'air ou de gaz sous pression a une forme telle qu'une forme de section transversale du flux d'air ou de gaz sous pression frappant la partie superficielle de la première pièce métallique suit à peu près la forme de la partie superficielle.
